# EUROPÄISCHE PATENTSCHRIFT

(11) **EP 3 317 149 B1**
(45) Veröffentlichungstag und Bekanntmachung des Hinweises auf die Patenterteilung: **23.10.2019**
(21) Anmeldenummer: 16733950.6
(22) Anmeldetag: 30.06.2016
(51) Int. Cl.: B60T 7/04, B60T 7/12, B60T 13/66

(54) **ELEKTRISCHE BREMSEINRICHTUNG MIT VOM BETRIEBSBREMSBETÄTIGUNGSORGAN BETÄTIGBARER FESTSTELLBREMSE**
ELECTRIC BRAKE DEVICE WITH PARKING BRAKE WHICH CAN BE ACTIVATED BY THE SERVICE BRAKE-ACTUATING ELEMENT
DISPOSITIF DE FREINAGE ÉLECTRIQUE COMPRENANT UN FREIN DE STATIONNEMENT POUVANT ÊTRE ACTIONNÉ PAR UN ÉLÉMENT D'ACTIONNEMENT DE FREIN DE SERVICE

(30) Priorität: 02.07.2015 DE 102015110670
(43) Veröffentlichungstag der Anmeldung: 09.05.2018
(73) Patentinhaber: KNORR-BREMSE Systeme für Nutzfahrzeuge GmbH, 80809 München (DE)
(72) Erfinder: HEEG, Sarah, 71701 Schwieberdingen (DE); MORITZ, Noller, 74321 Bietigheim-Bissingen (DE); WEILAND, Robert, 71254 71254 Ditzing (DE)
(86) Internationale Anmeldenummer: PCT/EP2016/065268
(87) Internationale Veröffentlichungsnummer: WO 2017/001546

(56) Entgegenhaltungen:
- EP-A1- 2 199 162
- EP-B1- 2 229 302
- WO-A1-00/03904
- WO-A1-2014/180810
- DE-A1- 19 611 360
- DE-A1-102005 051 521
- DE-A1-102012 010 841

## Beschreibung

Die Erfindung betrifft eine elektrische Bremseinrichtung für ein Fahrzeug gemäß dem Oberbegriff von Anspruch 1.

Ein solches elektrisches Bremssystem ist beispielsweise aus EP 2 229 302 B1 bekannt. Dort stellt die Feststellbremseinrichtung eine Hilfsbremsfunktion für die Betriebsbremse zur Verfügung, derart, dass bei einem Ausfall eines oder aller Betriebsbremskreise die Feststellbremssteuerelektronik Feststellbremsanforderungssignale von der Betriebsbremsbetätigungseinrichtung der Betriebsbremseinrichtung erhält. Der Fahrer kann daher bei fahrendem Fahrzeug weiterhin gewohnt das Fahrzeug mit dem Betriebsbremsbetätigungsorgan (Fußbremspedal) einbremsen, wenn die Betriebsbremseinrichtung ausgefallen ist, obwohl das Einbremsen in diesem Fall im Rahmen der Hilfsbremsfunktion mittels der Feststellbremseinrichtung erfolgt.

DE 10 2012 010 841 A1 beschreibt ein Verfahren zum Betreiben eines Kraftfahrzeugs, wobei das Verfahren folgende Schritte aufweist. Es erfolgt ein Abbremsen des Kraftfahrzeugs bis zu einem Stillstand des Kraftfahrzeugs mittels Betätigens eines Bremspedals des Kraftfahrzeugs. Zudem erfolgt ein Ermitteln, ob während des Stillstands des Kraftfahrzeugs das betätigte Bremspedal verstärkt durchgetreten wird, basierend auf von zumindest einem ersten Sensor des Kraftfahrzeugs ermittelter Daten. Falls ermittelt wird, dass das betätigte Bremspedal verstärkt durchgetreten wird, erfolgt ein automatisches Betätigen einer elektrischen Feststellbremse des Kraftfahrzeugs derart, dass das Kraftfahrzeug im Stillstand verbleibt.

DE19611360A1 offenbart eine Einrichtung zur automatischen Betätigung einer Bremsanlage eines Fahrzeugs zum Zweck der Aufrechterhaltung eines Fahrzeugstillstandes für die Dauer verkehrsbedingter Stillstandsphasen durch Einkopplung von Bremsdruck aus einer ohne Mitwirkung des Fahrers aktivierbaren Bremsdruckquelle in mindestens eine Radbremse des Fahrzeuges, wobei die Auslösung des Stillstands-Bremsbetriebes nur dann erfolgt, wenn der Fahrer selbst eine Betätigungsaktivität innerhalb einer Verzögerungszeitspanne entfaltet.

Der Erfindung liegt die Aufgabe zugrunde, ein elektrisches Bremssystem der eingangs erwähnten Art derart fortzubilden, dass es eine noch höhere Ausfallsicherheit gewährleistet.

Diese Aufgabe wird erfindungsgemäß durch die Merkmale von Anspruch 1 gelöst.

### Offenbarung der Erfindung

Der Erfindung liegt der Gedanke zugrunde, dass wenigstens eine Steuerelektronik vorgesehen und ausgebildet ist, dass sie bei funktionsfähiger elektrischer Betriebsbremseinrichtung im Rahmen einer erweiterten Feststellbremsfunktion den Bewegungszustand des Fahrzeugs sowie den Betätigungsgrad des Betriebsbremsbetätigungsorgans der Betriebsbremsbetätigungseinrichtung überwacht, und bei einer Detektion eines Fahrzeugsstillstands und bei einer zum Zeitpunkt des Einnehmens des Fahrzeugstillstands oder nach diesem Zeitpunkt erfolgten Detektion einer Betätigung des Betriebsbremsbetätigungsorgans um einen vorgegebenen Betätigungsgrad über den zum Zeitpunkt des Fahrzeugstillstands oder nach diesem Zeitpunkt vorliegenden Betätigungsgrad hinaus sofort ein Aktivierungssignal zum Einlegen der Feststellbremse erzeugt.

Bei der erweiterten Feststellbremsfunktion ist die elektrische Betriebsbremseinrichtung voll funktionsfähig, so dass nicht etwa gemäß der eingangs erwähnten EP 2 229 302 B1 erst bei einem Ausfall eines oder aller Betriebsbremskreise die Feststellbremssteuerelektronik Feststellbremsanforderungssignale von der Betriebsbremsbetätigungseinrichtung der Betriebsbremseinrichtung erhalten kann, um das Fahrzeug zwar mit dem Betriebsbremsbetätigungsorgan aber mittels der Feststellbremsaktuatoren der Feststellbremseinrichtung einbremsen. Zudem wirkt die erweiterte Feststellbremsfunktion lediglich im Fahrzeugstillstand.

Das im Rahmen der erweiterten Feststellbremsfunktion erzeugte Aktivierungssignal resultiert dann in einem Einlegen der Feststellbremse beispielsweise durch Zuspannen wenigstens eines Feststellbremsaktuators. Das im Rahmen der erweiterten Feststellbremsfunktion erzeugte Aktivierungssignal wird sofort, d.h. ohne zeitliche Verzögerung nach der Detektion einer im Hinblick auf den Betätigungsgrad oben beschriebenen Betätigung des Betriebsbremsbetätigungsorgans erzeugt. Damit wird ein unbeabsichtigtes Wegrollen des Fahrzeugs aus dem Fahrzeugstillstand wirksam verhindert.

Mit anderen Worten kann der Fahrer über das ansonsten lediglich für eine Betätigung der Betriebsbremse vorgesehene Betriebsbremsbetätigungsorgan der Betriebsbremsbetätigungseinrichtung z.B. ein Fußbremspedal nutzen, um im Fahrzeugstillstand die Feststellbremse zu betätigen. Zum Aktivieren oder Zuspannen der Feststellbremse unabhängig von einer Betätigung des hierfür eigentlich vorgesehenen Feststellbremsbetätigungsorgans muss also der Fahrer das Betriebsbremsbetätigungsorgan bezogen auf den Betätigungsgrad des Betriebsbremsbetätigungsorgans, welcher beim Einnehmen des Fahrzeugstillstands im Rahmen der vorangehenden Betriebsbremsung vorliegt oder vorlag, zusätzlich um wenigstens ein vorbestimmtes Betätigungsmaß betätigen. Es wird daher der normalen Feststellbremsfunktion, bei welcher die Feststellbremse wie üblich durch eine Betätigung des Feststellbremsbetätigungsorgans aktiviert wird, eine erweiterte Feststellbremsfunktion zur Seite gestellt, welche durch eine besondere Betätigung des Betriebsbremsbetätigungsorgans sofort aktiviert wird.

Dadurch kann auch bei einer Fehlfunktion oder einem Ausfall der Feststellbremsbetätigungseinrichtung bzw. von deren Feststellbremsbetätigungsorgan eine Aktivierung der Feststellbremse sichergestellt werden, was die Ausfallsicherheit der elektrischen Bremseinrichtung vorteilhaft erhöht.

Der Betätigungsgrad des Betriebsbremsbetätigungsorgans kann beispielsweise durch einen Betätigungsweg, einen Betätigungswinkel, eine Betätigungsgeschwindigkeit oder eine Betätigungsbeschleunigung des Betriebsbremsbetätigungsorgans repräsentiert werden. Dann stellt der vorgegebene Betätigungsgrad einen vorgegebenen Betätigungsweg, einen vorgegebenen Betätigungswinkel, eine vorgegebene Betätigungsgeschwindigkeit oder eine vorgegebene Betätigungsbeschleunigung des Betriebsbremsbetätigungsorgans dar, welche oder welcher als unterer Grenzwert von dem zum Zeitpunkt der Detektion des Fahrzeugsstillstands oder danach vorgenommenen Betätigungsgrad des Betriebsbremsbetätigungsorgans überschritten werden muss, um die erweiterte Feststellbremsfunktion zu aktivieren.

Die wenigstens eine Steuerelektronik, durch welche die erweiterte Feststellbremsfunktion gesteuert wird, kann in Bezug zu der Betriebsbremssteuerelektronik und der Feststellbremssteuerelektronik eine zusätzliche Steuerelektronik sein oder aber durch eine oder beide dieser Steuerelektroniken gebildet werden.

Weiterhin kann die elektrische Bremseinrichtung und/oder die elektrische Betriebsbremseinrichtung und/oder die elektrische Feststellbremseinrichtung eine elektro-pneumatische Bremseinrichtung, eine elektro-hydraulische Bremseinrichtung oder auch eine elektro-mechanische Bremseinrichtung sein. Denkbar sind auch beliebige Kombinationen von Betriebsbremseinrichtung und Feststellbremseinrichtung.

Weiterhin ist die wenigstens eine Steuerelektronik ausgebildet, dass sie die Feststellbremsbetätigungseinrichtung überwacht und bei Detektion eines Fehlers oder Ausfalls der Feststellbremsbetätigungseinrichtung und/oder von deren Feststellbremsbetätigungsorgan automatisch die erweiterte Feststellbremsfunktion aktiviert. Mit anderen Worten wird bei einem detektierten Fehler oder Ausfall der Feststellbremsbetätigungseinrichtung oder von deren Feststellbremsbetätigungsorgan die Feststellbremse automatisch über das Betriebsbremsbetätigungsorgan der Betriebsbremseinrichtung betätigt. Die Detektion des Fehlers oder Ausfalls der Feststellbremsbetätigungseinrichtung und/oder von deren Feststellbremsbetätigungsorgan erfolgt bevorzugt im Rahmen einer Selbstüberwachung der Feststellbremseinrichtung durch die Feststellbremssteuerelektronik. Die Aktivierung der erweiterten Feststellbremsfunktion bzw. der Feststellbremse durch das Betriebsbremsbetätigungsorgan ist aber nicht auf eine Detektion eines Fehlers oder Ausfalls der Feststellbremsbetätigungseinrichtung und/oder von deren Feststellbremsbetätigungsorgan beschränkt sondern kann völlig unabhängig davon erfolgen.

Durch die in den Unteransprüchen aufgeführten Maßnahmen sind vorteilhafte Weiterbildungen und Verbesserungen der in Anspruch 1 angegebenen Erfindung möglich.

Gemäß einer Weiterbildung ist die wenigstens eine Steuerelektronik ausgebildet, dass sie die normale Feststellbremsfunktion gegenüber der erweiterten Feststellbremsfunktion priorisiert. Mit anderen Worten hat eine Aktivierung der Feststellbremse, welche durch eine Betätigung des Feststellbremsbetätigungsorgans erfolgt, Vorrang vor einer Betätigung der Feststellbremse durch das Betriebsbremsbetätigungsorgan, so dass eine Fehlbedienung ausgeschlossen wird.

Wie oben bereits angedeutet, die kann wenigstens eine Steuerelektronik durch die Betriebsbremssteuerelektronik und/oder die Feststellbremssteuerelektronik gebildet werden, je nachdem, ob und inwieweit eine Funktionsaufteilung der weiteren Feststellbremsfunktion auf die Betriebsbremssteuerelektronik und die Feststellbremssteuerelektronik vorgenommen wird.

Beispielsweise können die Betriebsbremssteuerelektronik und die Feststellbremssteuerelektronik über eine Kommunikationsverbindung insbesondere zur Ausführung der weiteren Feststellbremsfunktion miteinander kommunizieren.

Darauf aufbauend kann beispielsweise die Betriebsbremssteuerelektronik den Bewegungszustand des Fahrzeugs sowie den Betätigungsgrad des Betriebsbremsbetätigungsorgans der Betriebsbremsbetätigungseinrichtung überwachen und bei einer Detektion eines Fahrzeugsstillstands und bei einer zum Zeitpunkt des Einnehmens des Fahrzeugstillstands oder nach diesem Zeitpunkt erfolgten Detektion einer Betätigung des Betriebsbremsbetätigungsorgans um einen vorgegebenen Betätigungsgrad über den zum Zeitpunkt des Fahrzeugstillstands oder nach diesem Zeitpunkt vorliegenden Betätigungsgrad hinaus sofort die Erzeugung des Aktivierungssignal zum Einlegen der Feststellbremse durch die Feststellbremssteuerelektronik veranlassen.

Alternativ kann aber auch die Feststellbremssteuerelektronik den Bewegungszustand des Fahrzeugs sowie den Betätigungsgrad des Betriebsbremsbetätigungsorgans überwachen und bei einer Detektion eines Fahrzeugsstillstands und bei einer zum Zeitpunkt des Einnehmens des Fahrzeugstillstands oder nach diesem Zeitpunkt erfolgten Detektion einer Betätigung des Betriebsbremsbetätigungsorgans um einen vorgegebenen Betätigungsgrad über den zum Zeitpunkt des Fahrzeugstillstands oder nach diesem Zeitpunkt vorliegenden Betätigungsgrad hinaus sofort das Aktivierungssignal zum Einlegen der Feststellbremse erzeugen.

Weiterhin alternativ könnte die Überwachung des Bewegungszustands des Fahrzeugs sowie des Betätigungsgrads des Betriebsbremsbetätigungsorgans sowie die Erzeugung des Aktivierungssignals zum Einlegen der Feststellbremse im Rahmen der erweiterten Feststellbremsfunktion auch in beliebiger Weise auf die Feststellbremssteuerelektronik und die Betriebsbremssteuerelektronik und/oder auf eine dritte Steuerelektronik verteilt werden, zumal beide Elektroniken bevorzugt miteinander kommunizieren, beispielsweise über einen CAN-Datenbus.

Bevorzugt wird davon ausgegangen, dass der zum Zeitpunkt des Einnehmens des Fahrzeugstillstands vorliegende Betätigungsgrad (Betätigungsweg, Betätigungswinkel, Betätigungsgeschwindigkeit, Betätigungsbeschleunigung) des Betriebsbremsbetätigungsorgans größer als Null ist, d.h. der Fahrer hält das Betriebsbremsbetätigungsorgan beispielsweise zunächst in dem für die vorangehende Betriebsbremsung zuletzt eingenommenen Betätigungsgrad, bevor er den Betätigungsgrad über das vorgegebene Maß hinaus erhöht, um die Feststellbremse zu aktivieren. Alternativ kann aber auch davon ausgegangen werden, dass der zum Zeitpunkt des Einnehmens des Fahrzeugstillstands vorliegende Betätigungsgrad (Betätigungsweg, Betätigungswinkel, Betätigungsgeschwindigkeit, Betätigungsbeschleunigung) des Betriebsbremsbetätigungsorgans gleich Null ist, d.h. der Fahrer übt zum Zeitpunkt des Einnehmens des Fahrzeugstillstands auf das Betriebsbremsbetätigungsorgan keine Aktivität mehr aus. Dies kann beispielsweise dann der Fall sein, wenn das Fahrzeug aus der Fahrt mit der Betriebsbremse hangaufwärts abgebremst wird und nach einem Loslassen des Betriebsbremsbetätigungsorgans bei noch in Fahrt mit geringer Geschwindigkeit befindlichem Fahrzeug die Hangneigung dafür sorgt, dass das Fahrzeug zum Stehen kommt. In diesem Fall muss dann der Fahrer das Betriebsbremsbetätigungsorgan nochmals mit dem entsprechenden Betätigungsgrad betätigen.

Bevorzugt ist wenigstens ein Feststellbremsaktuator der Feststellbremseinrichtung ausgebildet ist, dass er eine Feststellbremskraft aktiv durch Zuspannen erzeugt und das Aktivierungssignal dann ein Zuspannsignal zum Zuspannen des wenigstens einen Feststellbremsaktuators darstellt. Ein solcher Feststellbremsaktuator, beispielsweise ein pneumatischer Federspeicherbremszylinder kann daher eine Feststellbremskraft zwischen Null und einer maximalen Feststellbremskraft erzeugen. Diese Art von Feststellbremsaktuator ist vor allem in elektro-pneumatischen Feststellbremseinrichtungen vorhanden.

Alternativ kann der Feststellbremsaktuator eine Arretierung oder Verriegelung wenigstens eines im Rahmen der vorangehenden Betriebsbremsung bereits zugespannten Betriebsbremsaktuators bewirken und das Aktivierungssignal dann ein Verriegelungs- oder Arretierungssignal zum Überführen des wenigstens einen Feststellbremsaktuators in eine Arretierungs- oder Verriegelungsposition darstellen. Diese Art von Feststellbremsaktuator kommt vor allem bei elektromechanischen Bremseinrichtungen vor, in welchen die Betriebsbremsaktuatoren durch Elektromotoren gebildet werden. Der Feststellbremsaktuator verriegelt dann den Elektromotor direkt oder indirekt z.B. über den Bremsmechanismus in seiner zuletzt eingenommenen Betriebsbremsposition.

Besonders bevorzugt ist die elektrische Betriebsbremseinrichtung aber eine elektro-pneumatische Betriebsbremseinrichtung und der wenigstens eine Betriebsbremsaktuator ein aktiver pneumatischer Betriebsbremszylinder, welcher durch Belüftung in Zuspannstellung und durch Entlüftung in Lösestellung gebracht wird. In analoger Weise ist die elektrische Feststellbremseinrichtung besonders bevorzugt eine elektro-pneumatische Feststellbremseinrichtung und der wenigstens eine Feststellbremsaktuator ein passiver Federspeicherbremszylinder, welcher durch Belüftung in Lösestellung und durch Entlüftung in Zuspannstellung gebracht wird.

Gemäß einer Weiterbildung sind wenigstens die Feststellbremssteuerelektronik sowie eine wenigstens ein Magnetventil beinhaltende Ventileinrichtung in einem Feststellbremsmodul integriert, wobei die Feststellbremssteuerelektronik das wenigstens eine Magnetventil steuert, um an einem mit wenigstens einem Federspeicherbremszylinder verbundenen Arbeitsanschluss einen Arbeitsdruck für den wenigstens einen Feststellbremszylinder auszusteuern.

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der ein Ausführungsbeispiel der Erfindung darstellenden Zeichnung zeigt
- Fig.1: einen schematischen Schaltplan einer bevorzugten Ausführungsform einer elektrischen Bremseinrichtung eines Fahrzeugs;
- Fig.2: ein Diagramm, in welchem der Betätigungsweg s eines Betriebsbremspedals der elektrischen Bremseinrichtung von Fig.1 über der Zeit t dargestellt ist, ein Diagramm, in welchem die Fahrzeuggeschwindigkeit v über der Zeit t dargestellt ist und ein Diagramm, in welchem eine Feststellbremskraft P über der Zeit t dargestellt ist;

### Beschreibung der Ausführungsbeispiele

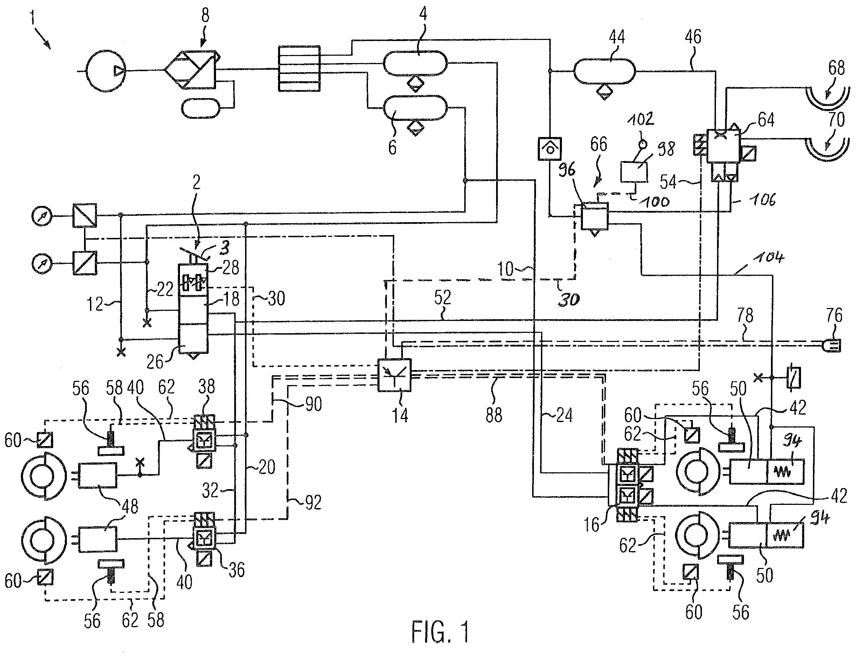

In **Fig.1** ist schematisch eine bevorzugte Ausführungsform einer elektrischen Bremseinrichtung 1 in Form einer elektro-pneumatischen Bremseinrichtung eines Zugfahrzeugs einer Zugfahrzeug-Anhängerkombination gezeigt. Im vorliegenden Fall weist die Zugfahrzeug-Anhängerkombination beispielsweise einen hier nicht gezeigten 2-achsigen Sattelanhänger auf, es könnten jedoch auch ein Deichselanhänger oder mehrere Deichselanhänger am Zugfahrzeug angehängt sein.

Dabei wird eine Betriebsbremseinrichtung des Zugfahrzeugs beispielsweise durch eine elektro-pneumatische Reibungsbremseinrichtung in Form eines elektronisch geregelten Bremssystems (EBS; Electronic Brake System) gebildet, bei welchem der Bremsdruck geregelt wird.

Bei einem solchen elektronisch geregelten Bremssystem (EBS) sind achsweise oder radweise Druckregelmodule 16, 36, 38 vorhanden, mit integrierten Einlassventilen, Auslassventilen und Back-up-Ventilen sowie mit Drucksensoren zur Erfassung des Ist-Bremsdrucks und mit einem lokalen elektronischen Steuergerät oder Bremsdruckregler zum Abgleich der Ist-Bremsdrücke mit den Soll-Bremsdrücken gemäß der jeweiligen Bremsanforderung. Der Aufbau und die Funktion solcher Druckregelmodule 16, 36, 38 ist hinlänglich bekannt und soll deshalb hier nicht weiter erläutert werden.

Das elektronisch geregelte Bremssystem (EBS) des Zugfahrzeugs beinhaltet weiterhin eine Bremsschlupfregelung (ABS), deren ABS-Steuerroutinen bevorzugt in ein zentrales elektronisches EBS-Bremssteuergerät 14 integriert sind. Weiterhin sind hier beim elektronisch geregelten Bremssystem (EBS) vorzugsweise eine Antriebsschlupfregelung (ASR) sowie ein elektronisches Stabilitätsprogramm (ESP) vorhanden, wobei die diesbezüglichen Steuerroutinen ebenfalls in dem zentralen Bremssteuergerät 14 implementiert sind.

Gemäß des in Fig.1 gezeigten Schaltschemas der elektro-pneumatischen Bremseinrichtung 1 des Zugfahrzeugs sind ein Fußbremswertgeber oder Fußbremsmodul 2 mit hier einem Fußbremspedal als Betriebsbremsbetätigungsorgan 3, ein Vorderachs-Vorratsdruckbehälter 4 zur Versorgung eines Vorderachs-Bremskreises oder Vorderachs-Druckkanals sowie ein Hinterachs-Vorratsdruckbehälter 6 zur Versorgung eines Hinterachs-Bremskreises oder Hinterachs-Druckkanals vorhanden. Die Luftbeschaffung, Luftaufbereitung und die Absicherung ist wie gesetzlich vorgeschrieben ausgeführt durch ein hier nicht näher beschriebenes Luftaufbereitungsmodul 8.

Der Hinterachs-Vorratsdruckbehälter 6 ist über pneumatische Versorgungsleitungen 10, 12 einerseits mit einem Vorratsanschluss eines 2-Kanal-Druckregelmoduls 16 für die Betriebsbremszylinder 50 der Hinterachse sowie mit einem Hinterachs-Kanal 26 des Fußbremsmoduls 2 verbunden. In analoger Weise ist der Vorderachs-Vorratsdruckbehälter 4 über pneumatische Versorgungsleitungen 20, 22 mit Vorratsanschlüssen von zwei jeweils einem Bremszylinder 48 eines Vorderrads zugeordneten 1-Kanal-Druckregelmodulen 36, 38 sowie mit einem Vorderachs-Kanal 18 des Fußbremsmoduls 2 verbunden.

Das Fußbremsmodul 2 umfasst daher zwei pneumatische Kanäle 18, 26, welche abhängig von einer durch den Fuß des Fahrers auf das Fußbremspedal 3 vorgegebenen Bremsanforderung jeweils einen pneumatischen Back-up-Druck oder Steuerdruck an den Ausgängen der Kanäle 18, 26 erzeugen. Parallel hierzu sind in dem Fußbremsmodul 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Datenbus 30 ausgebildete elektrische Verbindung zwischen dem elektrischen Kanal 28 des Fußbremsmoduls 2 und dem zentralen elektronischen EBS-Bremssteuergerät 14 einsteuert, welches die beiden beispielsweise wegen der Lastverteilung unterschiedlichen Bremsanforderungssignale für die Vorderachse und die Hinterachse unterscheiden kann.

Weiterhin sind der Vorderachs-Kanal 18 und der Hinterachs-Kanal 26 des Fußbremsmoduls 2 jeweils über eine pneumatische Steuerleitung 24, 32 mit zugeordneten Back-up-Anschlüssen des 2-Kanal-Druckregelmoduls 16 bzw. der 1-Kanal-Druckregelmodule 36, 38 verbunden. Weiterhin führt jeweils eine pneumatische Bremsleitung 40, 42 von Arbeitsanschlüssen des 2-Kanal-Druckregelmoduls 16 bzw. der beiden 1-Kanal- Druckregelmodule 36, 38 zu den radweisen pneumatischen Betriebsbremszylindern 48, 50 der Vorderachse bzw. der Hinterachse. Drehzahlsensoren 56 melden die aktuelle Drehzahl der Räder des Zweiachsfahrzeugs über elektrische Signalleitungen 58 an das zentrale Bremssteuergerät 14. Ebenso sind bevorzugt Verschleißsensoren 60 je Radbremse vorgesehen, welche abhängig vom aktuellen Bremsenverschleiß Signale über elektrische Signalleitungen 62 in das zentrale Bremssteuergerät 14 melden.

Weiterhin ist ein Anhängersteuermodul 64 vorgesehen, welches einerseits mit einem zugfahrzeugseitigen Anhänger-Vorratsdruckbehälter 44 über eine Versorgungsleitung 46 mit Druckluft versorgt wird und andererseits vom pneumatischen Steuerdruck beispielsweise des Vorderachs-Kanals 18 des Fußbremsmoduls 2 über eine Steuerleitung 52 pneumatisch durch Back-up-Druck gesteuert wird. Weiterhin erhält das Anhängersteuermodul 64 auch ein elektrisches Signal vom zentralen EBS-Bremssteuergerät 14 über eine elektrische Steuerleitung 54. Schließlich wird das Anhängersteuermodul 64 von einem Feststellbremsmodul 66 pneumatisch angesteuert.

Das Anhängersteuermodul 64 enthält typischerweise ein Einlassmagnetventil und ein Auslassmagnetventil sowie ein Backup-Magnetventil zur Drucksteuerung eines ebenfalls integrierten und vom Anhänger-Druckluftvorrat 44 druckluftgespeisten Relaisventils, um abhängig von einem über die elektrische Steuerleitung 54 herangeführten Steuersignal über diese Magnetventile und das Relaisventil einen Steuerdruck für einen Kupplungskopf "Bremse" 70 auszusteuern. Das Relaisventil moduliert dabei aus dem an seinem Vorratsanschluss anstehenden Vorratsdruck des Anhänger-Vorratsdruckbehälters 44 abhängig von dem durch die Magnetventile gebildeten Steuerdruck den Steuerdruck für den Kupplungskopf "Bremse" 70. Mittels eines integrierten Drucksensors wird dieser Steuerdruck für den Kupplungskopf "Bremse" 70 gemessen und an das zentrale Bremssteuergerät 14 gemeldet. Fällt diese vorrangige elektrische Steuerung aus, so schaltet das integrierte Back-up-Ventil durch und das Relaisventil wird durch den in der Steuerleitung 52 geführten pneumatischen Steuerdruck des Vorderachs-Bremskreises gesteuert. Schließlich schleift das Anhängersteuermodul 64 die vom Anhänger-Druckluftvorrat 44 stammende Druckluft unter Vorratsdruck an einen Kupplungskopf "Vorrat" 68 des Zugfahrzeugs durch. Der Aufbau und die Funktionen eines solchen elektro-pneumatischen Anhängersteuermoduls 64 sind hinlänglich bekannt und brauchen deshalb hier nicht weiter erläutert zu werden.

Die Bremszuspanneinrichtungen der Hinterachse sind bevorzugt als bekannte Kombizylinder, d.h. als Kombination eines aktiven Betriebsbremszylinders 50 und eines passiven Federspeicherbremszylinders 94 ausgebildet (Kombizylinder). "Aktiv" bedeutet in diesem Zusammenhang, dass die Betriebsbremszylinder 50 bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen. Die Federspeicherbremszylinder 94 sind hingegen passive Bremszylinder und werden durch Belüften gelöst und durch Entlüften zugespannt.

Das als Baueinheit ausgeführte elektro-pneumatische 2-Kanal-Druckregelmodul 16 hat zwei getrennt regelbare Druckregelkanäle, wobei für jeden Druckregelkanal auf der Basis einer von dem Hinterachs-Druckluftvorrat 6 stammenden Vorratsluft ab- hängig von dem Bremsanforderungssignal des Fußbremsmoduls 2 ein geregelter, an den jeweiligen Arbeitsdruckanschlüssen anstehender Arbeitsdruck für die Bremszylinder 50 der Hinterachse erzeugt und mittels der integrierten Drucksensoren gemessen wird, um den gemessenen Ist-Bremsdruck an den Soll-Bremsdruck gemäß Bremsanforderung anzupassen bzw. einzuregeln. In analoger Weise wird in jedem 1-Kanal-Druckregelmodul 36, 38 der Vorderachse individuell für die beiden Bremszylinder 48 der Räder der Vorderachse der Bremsdruck geregelt.

Zur Ausbildung von pneumatisch kreisgetrennten Druckregelkanälen (beispielsweise hier: Vorderachs-Druckregelkanal bzw. Hinterachs-Druckregel-kanal) ist jedem Druckregelkanal folglich ein eigener Druckluftvorrat 4, 6 zugeordnet, wobei die pneumatischen Strömungswege eines jeden Druckregelkanals ausgehend von dem zugeordneten Druckluftvorrat 4, 6 über die zugeordneten Druckregelmodule 16, 36, 38 bis zu den zugeordneten Bremszuspanneinrichtungen 48, 50 von dem pneumatischen Strömungsweg eines jeweils anderen Druckregelkanals pneumatisch getrennt ausgebildet sind.

Zur Ausbildung einer elektro-pneumatischen Betriebsbremseinrichtung mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelmodul 16, 36, 38 besonders bevorzugt ein eigener Back-up-Kreis zugeordnet, mit eigenem Back-up-Ventil für die Einsteuerung eines von dem Vorratsdruck des dem jeweiligen Druckregelkreis der Hinterachse bzw. der Vorderachse zugeordneten Druckluftvorrat 4, 6 abgeleiteten und vom Fußbremsmoduls 2 gebildeten pneumatischen Back-up- oder Steuerdrucks, aus welchem bei einem Ausfall von elektrischen Komponenten der jeweilige Bremsdruck an den Arbeitsdruckanschlüssen der Druckregelmodule 16, 36, 38 gebildet wird.

Die Bremseinrichtung 1 des Zugfahrzeugs und die Bremseinrichtung des Anhängers sind, wie bei solchen Bremsanlagen üblich, mittels jeweils eines Kupplungskopfes "Vorrat" 68 und jeweils mittels eines Kupplungskopfes "Bremse" 70 miteinander gekoppelt. Da das Anhängersteuermodul 64 kein eigenes elektronisches Steuergerät besitzt, müssen die elektrischen Bremssteuersignale vom zentralen Bremssteuergerät 14 über einen CAN-BUS "Anhänger" 78 und eine elektronische Anhängerschnittstelle 76 an den Anhänger übertragen werden, falls dieser eine elektro-pneumatische Bremsanlage aufweist. Das Anhängersteuermodul 64 wie auch das 2-Kanal-Druckregelmodul 16 und die beiden 1-Kanal-Druckregelmodule 36, 38 werden jeweils über eine elektrische Steuerleitung 54, 88, 90, 92 von dem zentralen Bremssteuergerät 14 angesteuert.

Anstatt einer rein pneumatischen Bremsanlage könnte der Anhänger auch mit einer elektro-pneumatischen Bremsanlage mit ABS-Funktion versehen sein. In diesem Fall ist die elektrische Schnittsstelle 76 des Zugfahrzeugs über eine Datenverbindung, beispielsweise ein Kabel mit einer hierzu komplementären Schnittstelle im Anhänger verbunden, die zu einem ABS-Steuergerät im Anhänger führt, um Daten austauschen zu können. Damit wird eine Bremsschlupfregelung für alle Achsen des Anhängers durchgeführt. Wenn aber, wie bevorzugt die Radbremsschlupfermittlung durch Raddrehzahlsensoren an beispielsweise nur einer Achse des 2-achsigen Sattelaufliegers durchgeführt wird, dann wird der Bremsschlupf an der anderen, nicht mit Raddrehzahlsensoren versehenen Achse nach der einen Achse mit Raddrehzahlsensoren geregelt. Daraus können dann die eingangs beschriebenen Nachteile hinsichtlich des Bremsblockierens der anderen Achse ohne Raddrehzahlsensierung und die damit verbundene mangelnde Seitenführung der Räder dieser an- deren Achse entstehen.

Das Feststellbremsmodul 66 enthält eine Feststellbremssteuerelektronik 96, welche Feststellbremsanforderungssignale von einer Feststellbremsbetätigungseinrichtung 98 empfängt, welche über eine elektrische Steuerleitung 100 in das Feststellbremsmodul 66 eingesteuert werden. Dabei werden die Feststellbremsanforderungssignale abhängig von einer Betätigung eines Feststellbremsbetätigungsorgans 102 erzeugt. Dieses Feststellbremsbetätigungsorgan 102 ist typischerweise ein Hebel, Wipptaster oder Drucktaster und wird üblicherweise vom Fahrer mit der Hand betätigt. Die Feststellbremssteuerelektronik 96 kommuniziert über den Datenbus 30 mit dem zentralen EBS-Bremssteuergerät 14. In dem Feststellbremsmodul 66 sind neben der Feststellbremssteuerelektronik 96 weiterhin eine Ventileinrichtung mit wenigstens einem bistabilen Magnetventil, einem Relaisventil sowie ein Drucksensor integriert. Ein Arbeitsanschluss des Feststellbremsmoduls 66 ist dann über eine pneumatische Leitung 104 mit den Federspeicherbremszylindern 94 der Hinterachse verbunden. Ein weiterer Arbeitsanschluss des Feststellbremsmoduls 66 steuert über eine weitere pneumatische Leitung 106 das Anhängersteuermodul 64 pneumatisch.

Vor diesem Hintergrund ist die Funktionsweise der Bremseinrichtung 1 wie folgt:
Bei einem normalen Bremsvorgang betätigt der Fahrer das Bremspedal und damit den Fußbremsmodul 2, wodurch in dem elektrischen Kanal 28 ein elektrisches Bremsanforderungssignal analog zur gewünschten Soll-Verzögerung bzw. zum Fahrerbremswunsch erzeugt und in das zentrale Bremssteuergerät 14 eingesteuert wird, welches daraufhin über die die elektrischen Steuerleitungen 54, 88, 90, 92 entsprechend dem Bremsanforderungssignal und eventuell abhängig von weiteren Parametern wie der jeweiligen Ladungsverteilung jeweils einen Soll-Bremsdruck in das Anhängersteuermodul 64, das 2-Kanal-Druckregelmodul 16 der Hinterachse sowie die beiden 1-Kanal-Druckregelmodule 36, 38 der Vorderachse einsteuert.

Dabei werden in den Druckregelmoduln 16, 36, 38 sowie auch im Anhängersteuermodul 64 die jeweils integrierten Einlassmagnetventile, Auslassmagnetventile und evtl. Back-up-Magnetventile, die meist als 2/2-Wege-Magnetventile ausgebildet sind, entsprechend der Bremsanforderung geschaltet, damit sie die ebenfalls integrierten Relaisventile pneumatisch steuern, um einen gemäß der Bremsanforderung entsprechenden Soll-Bremsdrücke in die betreffenden Bremszylinder 48, 50 des Zugfahrzeugs bzw. in der Bremszylinder des Anhängers einzusteuern. Die in den Druckregelmoduln 16, 36 und 38 und in dem Anhängersteuermodul 64 integrierten Drucksensoren melden dann den Ist-Bremsdruck bzw. Ist-Steuerdruck an die lokalen elektronischen Steuergeräte 94 in den Druckregelmoduln 16, 36 und 38 bzw. im Anhängersteuermodul 64, welche daraufhin durch Ansteuerung der modulseitigen Magnetventile den jeweiligen Soll-Bremsdruck einregeln.

Wenn das Bremsanforderungssignal für das zentrale Bremssteuergerät 14 anstatt vom Fußbremsmodul 2 von einem Fahrassistenzsystem wie z.B. ESP (Electronic Stability Program) oder ACC (Adaptive Cruise Control) erzeugt wird, so laufen die gleichen Funktionen wie oben beschrieben ab.

Falls der Bremsschlupf eines Rades oder mehrerer Räder des Zugfahrzeugs eine vorgegebene Bremsschlupfgrenze von beispielsweise 12% bis 14% überschreitet, was über die Raddrehzahlsensoren 56 festgestellt werden kann, so spricht die Bremsschlupfregelung bzw. das ABS des Zugfahrzeugs an. Dabei wird über eine entsprechende Ansteuerung der Magnetventile in dem dem jeweils bremsschlupfenden Rad zugeordneten Druckregelmodul 36, 38 bzw. in dem den jeweils bremsschlupfenden Rädern zugeordneten Druckregelmodul 16 durch die in dem zentralen EBS-Bremssteuergerät 14 implementierten ABS-Routinen die Bremsdrücke für das Zugfahrzeug so eingestellt, dass die Bremsschlupf-Regeldifferenz ausgeregelt wird.

In dem zentralen EBS-Bremssteuergerät 14 sind Kompatibilitätsbänder gespeichert, welche das Verhältnis zwischen der jeweils gewünschten Abbremsung z der Zugfahrzeug-Anhängerkombination und der daraus resultierenden Bremskraft des Anhängers bzw. und dem Druck am Kupplungskopf "Bremse" des Zugfahrzeugs festlegen. Der sich aus dem Kompatibilitätsband ergebende Bremsdruck für die Bremsanlage des Anhängers kann dann optional noch durch eine Koppelkraftregelung modifiziert werden. Dann wird das Anhängersteuermodul 64 von dem zentralen Bremssteuergerät 14 angesteuert, um den pneumatischen Steuerdruck im Kupplungskopf "Bremse" für den Anhänger entsprechend dieser Vorgaben einzustellen. Somit würde der Bremsdruck im Anhänger abhängig von dem durch die Bremsschlupfregelung beeinflussten Bremsdruck im Zugfahrzeug gebildet.

Zusammenfassend bildet daher der in ihrer absoluten Größe vom Bremsanforderungssignal oder von der vorgegebenen Soll-Verzögerung der Zugfahrzeug-Anhängerkombination, von der ansprechenden Bremsschlupfregelung (Reibwert der Fahrbahnoberfläche) des Zugfahrzeugs, vom Kompatibilitätsband Zugfahrzeug-Anhänger und eventuell noch von einer vorhandenen Koppelkraftregelung abhängige Bremsdruck der Bremsanlage des Anhängers dann einen Referenzbremsdruck für die Bremsanlage des Anhängers. Anstatt eines Referenzbremsdrucks kann auch eine Referenzbremskraft des Anhängers oder eine Referenzabbremsung des Anhängers herangezogen werden, welche sich auf die gleichen oben beschriebenen Umstände bezieht.

Wenn nach dem Einbremsen des Fahrzeugs mittels der Betriebsbremseinrichtung in den Fahrzeugstillstand im Rahmen einer normalen Feststellbremsfunktion das Feststellbremsbetätigungsorgan 102 in die Stellung "Parken" betätigt wird, so wird ein entsprechendes Feststellbremsanforderungssignal in die Feststellbremssteuerelektronik 96 eingesteuert, welche daraufhin die integrierte Ventileinrichtung steuert, um den einen Arbeitsanschluss und damit die pneumatische Leitung 104 sowie die Federspeicherbremszylinder 94 zu entlüften, welche daraufhin zuspannen. Der andere, mit der pneumatischen Leitung 106 verbundene Arbeitsanschluss wird ebenfalls entlüftet. Folglich wird der an die pneumatische Leitung 106 angeschlossene pneumatische Steueranschluss des Anhängersteuermoduls 64 ebenfalls entlüftet, wobei das Anhängersteuermodul 66 gemäß seiner invertierenden Eigenschaft dann den Kupplungskopf "Bremse" 70 belüftet, um die Anhängerbremsen zuzuspannen.

Beispielsweise das zentrale EBS-Bremssteuergerät 14 ist ausgebildet, dass es bei im Rahmen einer erweiterten Feststellbremsfunktion den Bewegungszustand des Zugfahrzeugs bzw. der Zugfahrzeug-Anhängerkombination sowie den Betätigungsgrad des Betriebsbremsbetätigungsorgans 3 der Betriebsbremsbetätigungseinrichtung überwacht. Die Überwachung des Betätigungsgrads des Betriebsbremsbetätigungsorgans 3 erfolgt dabei mittels der im Datenbus 30 geführten Signale des elektrischen Kanals 28 des Fußbremsmoduls 2. Informationen über den Bewegungszustand des Zugfahrzeugs bzw. der Zugfahrzeug-Anhängerkombination erhält die zentrale EBS-Bremssteuergerät 14 beispielsweise von den Raddrehzahlsensoren 56.

Bei der erweiterten Feststellbremsfunktion wird dann bei voll funktionsfähiger elektrischer Betriebsbremseinrichtung und bei einer Detektion eines Stillstands des Zugfahrzeugs bzw. der Zugfahrzeug-Anhängerkombination und bei einer zum Zeitpunkt des Einnehmens des Stillstands oder nach diesem Zeitpunkt erfolgten Detektion einer Betätigung des Betriebsbremsbetätigungsorgans 3 um einen vorgegebenen Betätigungsgrad über den zum Zeitpunkt des Stillstands vorliegenden Betätigungsgrad hinaus von dem zentralen EBS-Steuergerät 14 sofort, aber unter Berücksichtigung einer für die Bildung und Berechnung entsprechender Steuersignale üblicher sehr kurzen Zeitspanne ein über den Datenbus 30 übertragener Befehl für die Feststellbremssteuerelektronik 96 erzeugt, damit diese ein Aktivierungssignal zum Zuspannen der Feststellbremse (Feststellbremsanforderungssignal) generiert, welche daraufhin die pneumatischen Leitungen 104 und 106 entlüftet, um einerseits die Federspeicherbremszylinder 94 des Zugfahrzeugs und andererseits die Anhängerbremsen zuzuspannen.

Daher wird im Rahmen der erweiterten Feststellbremsfunktion das ansonsten lediglich für eine Betätigung der Betriebsbremsenrichtung vorgesehene Betriebsbremsbetätigungsorgan 3 des Fußbremsmoduls 2 genutzt, um im Fahrzeugstillstand die Feststellbremse zu betätigen. Zum Aktivieren oder Zuspannen der Feststellbremse unabhängig von einer Betätigung des hierfür eigentlich vorgesehenen Feststellbremsbetätigungsorgans 102 muss also der Fahrer das Betriebsbremsbetätigungsorgan 3 bezogen auf den Betätigungsgrad des Betriebsbremsbetätigungsorgans 3, welcher beim Einnehmen des Fahrzeugstillstands im Rahmen der vorangehenden Betriebsbremsung vorliegt oder vorlag, zusätzlich um wenigstens ein vorbestimmtes Betätigungsmaß betätigen. Dadurch kann auch bei einer Fehlfunktion oder einem Ausfall der Feststellbremsbetätigungseinrichtung 98 bzw. von deren Feststellbremsbetätigungsorgan 102 eine Aktivierung der Feststellbremse sichergestellt werden, was die Ausfallsicherheit der elektrischen Bremseinrichtung 1 vorteilhaft erhöht.

Der Betätigungsgrad des Betriebsbremsbetätigungsorgans 3 kann beispielsweise durch einen Betätigungsweg, einen Betätigungswinkel, eine Betätigungsgeschwindigkeit oder eine Betätigungsbeschleunigung des Betriebsbremsbetätigungsorgans repräsentiert werden. Dann stellt der vorgegebene Betätigungsgrad einen vorgegebenen Betätigungsweg, einen vorgegebenen Betätigungswinkel, eine vorgegebene Betätigungsgeschwindigkeit oder eine vorgegebene Betätigungsbeschleunigung des Betriebsbremsbetätigungsorgans 3 dar, welche oder welcher als unterer Grenzwert von dem zum Zeitpunkt der Detektion des Fahrzeugsstillstands oder danach vorgenommenen Betätigungsgrad des Betriebsbremsbetätigungs-organs 3 überschritten werden muss, um die erweiterte Feststellbremsfunktion zu aktivieren.

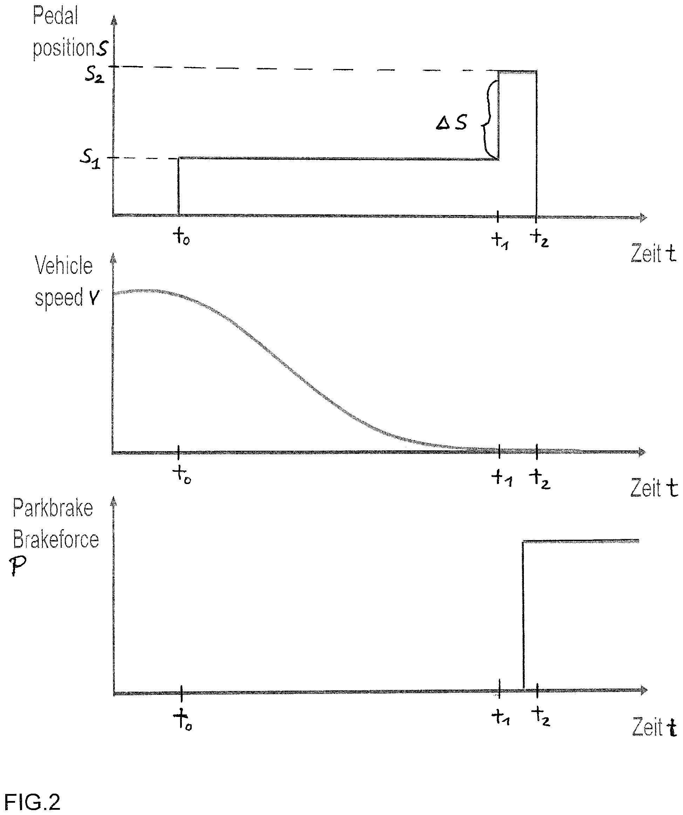

In **Fig.2** wird die erweiterte Feststellbremsfunktion anhand von Diagrammen anschaulich erläutert. Fig.2 zeigt ein Diagramm, in welchem der Betätigungsweg s des Betriebsbremsbetätigungsorgans 3 über der Zeit t dargestellt ist, ein Diagramm, in welchem die Fahrzeuggeschwindigkeit v über der Zeit t dargestellt ist sowie ein Diagramm, in welchem eine Feststellbremskraft P über der Zeit t dargestellt ist.

Zum Zeitpunkt t₀ wird das Betriebsbremsbetätigungsorgan 3 beispielsweise um einen Betätigungsweg s₁ betätigt, um die Fahrzeuggeschwindigkeit v innerhalb des Zeitintervalls t₀, t₁ auf die Geschwindigkeit Null mit der Betriebsbremse einzubremsen. Es wird hier davon ausgegangen, dass der Fahrer das Betriebsbremsbetätigungsorgan 3 weiterhin mit dem Betätigungsweg s₁ betätigt hält, wenn das Zugfahrzeug bzw. die Zugfahrzeug-Anhängerkombination sich bereits im Stillstand befindet. Der Stillstand zum Zeitpunkt t₁ wird von dem zentralen EBS-Bremssteuergerät 14 über die Raddrehzahlinformationen der Raddrehzahlsensoren 56 registriert.

Wenn nun der Fahrer zum Zeitpunkt t₁ des Einnehmens des Stillstands oder kurz nach diesem Zeitpunkt t₁ das Betriebsbremsbetätigungsorgan 3 um einen vorgegebenen Betätigungsweg Δs über den zum Zeitpunkt t₁ des Stillstands kurz oder kurz nach diesem Zeitpunkt t₁ vorliegenden Betätigungsweg s₁ hinaus betätigt, z.B. um einen Betätigungsweg s₂, so wird dieser Betätigungsweg s₂ von dem zentralen EBS-Bremssteuergerät 14 über den elektrischen Kanal 28 des Fußbremsmoduls 2 erfasst. Daraufhin erzeugt das zentrale EBS-Bremssteuergerät 14 sofort, d.h. unter Berücksichtigung einer für die Bildung und Berechnung entsprechender Steuersignale üblicher sehr kurzen Zeitspanne einen Befehl für die Feststellbremssteuerelektronik 96, damit diese ein Feststellbremsanforderungssignal zum Zuspannen der Feststellbremse erzeugt, welche daraufhin die pneumatischen Leitungen 104 und 106 entlüftet, um einerseits die Federspeicherbremszylinder 94 des Zugfahrzeugs und andererseits die Anhängerbremsen zuzuspannen.

Wie aus dem unteren Diagramm hervorgeht, vergeht ausgehend vom Zeitpunkt t₁, an welchem das Aktivierungssignal erzeugt wird bis zum Erzeugen der Feststellbremskraft P durch die Feststellbremsaktuatoren 94 noch eine geringe Zeit. Zum Zeitpunkt t₂ nimmt der Fahrer dann den Fuß vom Betriebsbremsbetätigungsorgan 3.

Besonders bevorzugt ist die Feststellbremssteuerelektronik 96 ausgebildet, dass sie z.B. im Rahmen von Selbstüberwachungsroutinen der Feststellbremse die Feststellbremsbetätigungseinrichtung 98 und/oder deren Feststellbremsbetätigungsorgan 102 auf Fehler oder Ausfälle überwacht und bei Detektion eines Fehlers oder Ausfalls über den Datenbus 30 automatisch einen Befehl an das zentrale EBS-Bremssteuergerät 14 sendet, welches daraufhin die erweiterte Feststellbremsfunktion aktiviert und daher den Bewegungszustand des Zugfahrzeugs bzw. der Zugfahrzeug-Anhängerkombination sowie den Betätigungsweg s des Betriebsbremsbetätigungsorgans 3 in der oben beschriebenen Weise überwacht, um eventuell über die Feststellbremssteuerelektronik 96 die erweiterte Feststellbremsfunktion zu aktivieren.

Die Aktivierung der erweiterten Feststellbremsfunktion bzw. der Feststellbremse durch das Betriebsbremsbetätigungsorgan 3 ist aber nicht auf eine Detektion eines Fehlers oder Ausfalls in der Feststellbremsbetätigungseinrichtung 98 und/oder im Feststellbremsbetätigungsorgan 102 beschränkt sondern kann völlig unabhängig davon erfolgen.

Bevorzugt wird die normale Feststellbremsfunktion gegenüber der erweiterten Feststellbremsfunktion priorisiert. Mit anderen Worten hat eine Aktivierung der störungsfrei arbeitenden Feststellbremse, welche durch eine Betätigung des Feststellbremsbetätigungsorgans 102 erfolgt, Vorrang vor einer Betätigung der Feststellbremse durch das Betriebsbremsbetätigungsorgan 3.

Gemäß einer weiteren Ausführungsform kann anstatt des zentralen EBS-Bremssteuergeräts 14 auch die Feststellbremssteuerelektronik 96 selbst den Bewegungszustand des Fahrzeugs sowie den Betätigungsgrad des Betriebsbremsbetätigungsorgans 3 überwachen, beispielsweise aufgrund der vom EBS-Bremssteuergeräts 14 auf den Datenbus 30 gesteuerten Raddrehzahlsignale bzw. anhand der vom elektrischen Kanal 28 des Fußbremsmoduls 2 über den Datenbus 30 übermittelten Signale und dann die oben beschriebene erweiterte Feststellbremsfunktion direkt in Gang setzen.

### BEZUGSZEICHENLISTE

- 1: Elektrische Bremseinrichtung
- 2: Fußbremsmodul
- 3: Betriebsbremsbetätigungsorgan
- 4: VA-Vorratsdruckbehälter
- 6: HA-Vorratsdruckbehälter
- 8: Luftaufbereitungsmodul
- 10: Versorgungsleitung
- 12: Versorgungsleitung
- 14: zentrales Bremssteuergerät
- 16: 2-Kanal-Druckregelmodul
- 18: VA-Kanal
- 20: Versorgungsleitung
- 22: Versorgungsleitung
- 24: Steuerleitung
- 26: HA-Kanal
- 28: elektrischer Kanal
- 30: Datenbus
- 32: Steuerleitung
- 36: 1-Kanal-Druckregelmodul
- 38: 1-Kanal-Druckregelmodul
- 40: Bremsleitung
- 42: Bremsleitung
- 44: zugfahrzeugseitiger Anhänger-Vorratsdruckbehälter
- 46: Versorgungsleitung
- 48: Bremszuspanneinrichtung VA
- 50: Bremszuspanneinrichtung HA
- 52: Steuerleitung
- 54: elektrische Steuerleitung
- 56: Drehzahlsensoren
- 58: elektrische Signalleitungen
- 60: Verschleißsensoren
- 62: elektrische Signalleitungen
- 64: Anhängersteuermodul
- 66: Feststellbremsmodul
- 68: Kupplungskopf "Vorrat"
- 70: Kupplungskopf "Bremse"
- 76: Anhängerschnittstelle
- 78: Anhänger-Datenbus
- 88: elektrische Steuerleitung
- 90: elektrische Steuerleitung
- 92: elektrische Steuerleitung
- 94: Federspeicherbremszylinder
- 96: Feststellbremssteuerelektronik
- 98: Feststellbremsbetätigungseinrichtung
- 100: elektrische Steuerleitung
- 102: Feststellbremsbetätigungsorgan
- 104: pneumatische Leitung
- 106: pneumatische Leitung

## Patentansprüche

1. Elektrische Bremseinrichtung (1) für ein Fahrzeug, beinhaltend
a) eine elektrische Betriebsbremseinrichtung mit einer ein Betriebsbremsbetätigungsorgan (3) aufweisenden Betriebsbremsbetätigungseinrichtung (2) zur Erzeugung eines Betriebsbremsanforderungssignals abhängig von einer Betätigung des Betriebsbremsbetätigungsorgans (3) sowie mit einer Betriebsbremssteuerelektronik (14), welche im Rahmen einer Betriebsbremsfunktion abhängig von dem Betriebsbremsanforderungssignal ein Zuspannsignal für wenigstens einen Betriebsbremsaktuator (50) erzeugt,
b) eine elektrische Feststellbremseinrichtung mit einer ein in Bezug zum Betriebsbremsbetätigungsorgan (3) separates Feststellbremsbetätigungsorgan (102) aufweisenden Feststellbremsbetätigungseinrichtung (98) zur Erzeugung eines Feststellbremsanforderungssignals abhängig von einer Betätigung des Feststellbremsbetätigungsorgans (102) sowie mit einer Feststellbremssteuerelektronik (96), welche im Rahmen einer normalen Feststellbremsfunktion abhängig von dem Feststellbremsanforderungssignal ein Aktivierungssignal zum Einlegen der Feststellbremse erzeugt, **dadurch gekennzeichnet, dass** wenigstens eine Steuerelektronik (14; 96) vorgesehen und ausgebildet ist, dass sie bei funktionsfähiger elektrischer Betriebsbremseinrichtung im Rahmen einer erweiterten Feststellbremsfunktion
c) den Bewegungszustand des Fahrzeugs sowie den Betätigungsgrad (s) des Betriebsbremsbetätigungsorgans (3) der Betriebsbremsbetätigungseinrichtung (2) überwacht, und
d) bei einer Detektion eines Fahrzeugstillstands und bei einer zum Zeitpunkt (t₁) des Einnehmens des Fahrzeugstillstands oder nach diesem Zeitpunkt (t₁) erfolgten Detektion einer Betätigung des Betriebsbremsbetätigungsorgans (3) um einen vorgegebenen Betätigungsgrad (Δs) über den zum Zeitpunkt (t₁) des Fahrzeugstillstands oder nach diesem Zeitpunkt (t₁) vorliegenden Betätigungsgrad (s₁) hinaus sofort ein Aktivierungssignal zum Einlegen der Feststellbremse erzeugt, wobei
e) die wenigstens eine Steuerelektronik (14; 96) ausgebildet ist, dass sie die Feststellbremsbetätigungseinrichtung überwacht und bei Detektion eines Fehlers oder Ausfalls der Feststellbremsbetätigungseinrichtung (98) und/oder von deren Feststellbremsbetätigungsorgan (102) automatisch die erweiterte Feststellbremsfunktion aktiviert.

2. Elektrische Bremseinrichtung nach Anspruch 1, **dadurch gekennzeichnet, dass** die wenigstens eine Steuerelektronik (14; 96) ausgebildet ist, dass sie die normale Feststellbremsfunktion gegenüber der erweiterten Feststellbremsfunktion priorisiert.

3. Elektrische Bremseinrichtung nach einem der vorhergehenden Ansprüche, **dadurch gekennzeichnet, dass** die wenigstens eine Steuerelektronik (14; 96) durch die Betriebsbremssteuerelektronik und/oder die Feststellbremssteuerelektronik gebildet wird.

4. Elektrische Bremseinrichtung nach Anspruch 3, **dadurch gekennzeichnet, dass** die Betriebsbremssteuerelektronik (14) und die Feststellbremssteuerelektronik (96) über eine Kommunikationsverbindung (30) miteinander kommunizieren.

5. Elektrische Bremseinrichtung nach Anspruch 4, **dadurch gekennzeichnet, dass** die Betriebsbremssteuerelektronik (14) den Bewegungszustand des Fahrzeugs sowie den Betätigungsgrad (s) des Betriebsbremsbetätigungsorgans (3) der Betriebsbremsbetätigungseinrichtung überwacht und bei einer Detektion eines Fahrzeugstillstands und bei einer zum Zeitpunkt (t₁) des Einnehmens des Fahrzeugstillstands oder nach diesem Zeitpunkt (t₁) erfolgten Detektion einer Betätigung des Betriebsbremsbetätigungsorgans (3) um einen vorgegebenen Betätigungsgrad (Δs) über den zum Zeitpunkt (t₁) des Fahrzeugstillstands oder nach diesem Zeitpunkt (t₁) vorliegenden Betätigungsgrad (s₁) hinaus sofort eine Erzeugung des Aktivierungssignals zum Einlegen der Feststellbremse durch die Feststellbremssteuerelektronik (96) veranlasst.

6. Elektrische Bremseinrichtung nach Anspruch 4, **dadurch gekennzeichnet, dass** die Feststellbremssteuerelektronik (96) den Bewegungszustand des Fahrzeugs sowie den Betätigungsgrad (s) des Betriebsbremsbetätigungsorgans (3) überwacht und bei einer Detektion eines Fahrzeugstillstands und bei einer zum Zeitpunkt (t₁) des Einnehmens des Fahrzeugstillstands oder nach diesem Zeitpunkt (t₁) erfolgten Detektion einer Betätigung des Betriebsbremsbetätigungsorgans (3) um einen vorgegebenen Betätigungsgrad (Δs) über den zum Zeitpunkt (t₁) des Fahrzeugstillstands oder nach diesem Zeitpunkt (t₁) vorliegenden Betätigungsgrad (s₁) hinaus sofort das Aktivierungssignal zum Einlegen der Feststellbremse erzeugt.

7. Elektrische Bremseinrichtung nach einem der vorhergehenden Ansprüche, **dadurch gekennzeichnet, dass** der zum Zeitpunkt (t₁) des Einnehmens des Fahrzeugstillstands vorliegende Betätigungsgrad (s₁) des Betriebsbremsbetätigungsorgans gleich Null oder größer als Null sein kann.

8. Elektrische Bremseinrichtung nach einem der vorhergehenden Ansprüche, **dadurch gekennzeichnet, dass** wenigstens ein Feststellbremsaktuator (94) der Feststellbremseinrichtung derart ausgebildet ist, dass
a) er eine Feststellbremskraft aktiv durch Zuspannen erzeugt und das Aktivierungssignal dann ein Zuspannsignal zum Zuspannen des Feststellbremsaktuators (94) darstellt, oder dass
b) er eine Arretierung oder Verriegelung wenigstens eines im Rahmen der vorangehenden Betriebsbremsung bereits zugespannten Betriebsbremsaktuators (50) bewirkt und das Aktivierungssignal dann ein Verriegelungs- oder Arretierungssignal zum Überführen des wenigstens einen Feststellbremsaktuators (94) in eine Arretierungs- oder Verriegelungsposition darstellt.

9. Elektrische Bremseinrichtung nach Anspruch 8, **dadurch gekennzeichnet, dass**
a) die elektrische Betriebsbremseinrichtung eine elektro-pneumatische Betriebsbremseinrichtung und der wenigstens eine Betriebsbremsaktuator (50) ein aktiver pneumatischer Betriebsbremszylinder ist, welcher durch Belüftung in Zuspannstellung und durch Entlüftung in Lösestellung gebracht wird, und
b) die elektrische Feststellbremseinrichtung eine elektro-pneumatische Feststellbremseinrichtung und der wenigstens eine Feststellbremsaktuator (94) ein passiver Federspeicherbremszylinder ist, welcher durch Belüftung in Lösestellung und durch Entlüftung in Zuspannstellung gebracht wird.

10. Elektrische Bremseinrichtung nach Anspruch 9, **dadurch gekennzeichnet, dass** wenigstens die Feststellbremssteuerelektronik (96) sowie eine wenigstens ein Magnetventil beinhaltende Ventileinrichtung in einem Feststellbremsmodul (66) integriert sind, wobei die Feststellbremssteuerelektronik (96) das wenigstens eine Magnetventil steuert, um an einem mit wenigstens einem Federspeicherbremszylinder (94) verbundenen Arbeitsanschluss einen Arbeitsdruck für den wenigstens einen Feststellbremszylinder (94) auszusteuern.

11. Fahrzeug aufweisend eine elektrische Bremseinrichtung nach einem der vorhergehenden Ansprüche

## Claims

1. An electric brake device (1) for a vehicle, comprising
a) an electric service-brake device with a service-brake actuation device (2) having a service-brake actuation element (3) for producing a service-brake demand signal as a function of an actuation of the service-brake actuation element (3) and with an electronic service-brake control system (14), which emits a closing signal for at least one service-brake actuator (50) in the context of a service-brake function that depends on the service-brake demand signal,
b) an electric parking-brake device with a parking-brake actuating device (98) having a parking-brake actuation element (102) separate from the service-brake actuation element (3) in order to produce a parking-brake demand signal that depends on an actuation of the parking-brake actuation element (102) and with an electronic parking-brake control system (96), which emits an actuation signal that depends on the parking-brake demand signal for the application of the parking-brake in the context of a normal parking-brake function,
**characterized in that**
at least one electronic control system (14; 96) is provided and designed so that, when the electric service-brake device is functional in the context of an extended parking-brake function,
c) it monitors the state of movement of the vehicle and the degree of actuation (s) of the service-brake actuation element (3) of the service-brake actuation device (2), and
d) if it is detected that the vehicle is at rest, it immediately emits an actuation signal for the application of the parking-brake, if it is detected at the time (t₁) when it is established that the vehicle is at rest or after this time (t₁) that the service-brake actuation element (3) has been actuated by a specified degree of activation (Δs) in excess of the degree of actuation (s₁) existing at the time (t₁) when the vehicle is at rest or after this time (t₁) wherein
e) the at least one electronic control system (14; 96) is designed to monitor the parking-brake actuation device and to automatically activate the extended parking-brake function upon detecting an error or failure of the parking-brake actuation device (98) and/or its parking-brake actuation element (102).

2. Electric brake device according to Claim 1,
**characterized in that**
the at least one electronic control system (14; 96) is designed so that it gives priority to the normal parking-brake function over the extended parking-brake function.

3. Electric brake device according to either of the preceding claims,
**characterized in that**
the at least one electronic control system (14; 96) is formed by the service-brake electronic control system and/or the parking-brake electronic control system.

4. Electric brake device according to any of the preceding claims,
**characterized in that**
the service-brake electronic control system (14) and the parking-brake electronic control system (96) communicate with each other by way of a communication link (30).

5. Electric brake device according to Claim 4,
**characterized in that**
the service-brake electronic control system (14) monitors the state of movement of the vehicle and the degree of actuation (s) of the service-brake actuation element (3) of the service-brake actuation device, and immediately initiates the emission of the actuation signal for the application of the parking-brake by the electronic parking-brake control system (96) if it is detected that the vehicle is at rest, and if it is detected at the time (t₁) when the stationary state of the vehicle is established or after this time (t₁) that the service-brake actuation element (3) has been actuated by a specified degree of actuation (Δs) in excess of the degree of actuation (s₁) existing at the time (t₁) when the vehicle is at rest or after this time (t₁).

6. Electric brake device according to Claim 4,
**characterized in that**
the parking-brake electronic control system (96) monitors the state of movement of the vehicle and the degree of actuation (s) of the service-brake actuation element (3), and immediately emits the actuation signal for the application of the parking-brake if it is detected that the vehicle is at rest and if it is detected at the time (t₁) when the stationary state of the vehicle is established or after this time (t₁) that the service-brake actuation element (3) has been actuated by a specified degree of actuation (Δs) in excess of the degree of actuation (s₁) existing at the time (t₁) when the vehicle is at rest or after this time (t₁).

7. Electric brake device according to any of the preceding claims,
**characterized in that**
the degree of actuation (s₁) of the service-brake actuation element existing at the time (t₁) when it is established that the vehicle is at rest, can be equal to zero or greater than zero.

8. Electric brake device according to any of the preceding claims,
**characterized in that**
at least one parking-brake actuator (94) of the parking-brake device is designed in such manner that:
a) it actively generates a parking-brake force by closing and the actuation signal then constitutes a closing signal for the closing of the at least one parking-brake actuator (94), or
b) it arrests or locks at least one service-brake actuator (50) already closed during the previous service-brake application, and the actuation signal then constitutes a locking or arresting signal for changing the at least one parking-brake actuator (94) to an arresting or locking position.

9. Electric brake device according to Claim 8,
**characterized in that**
a) the electric service-brake device is an electro-pneumatic service-brake device and the at least one service-brake actuator (50) is an active pneumatic service-brake cylinder, which is brought to the application position by supplying air and to the release position by venting air, and
b) the electric parking-brake device is an electro-pneumatic parking-brake device and the at least one parking-brake actuator (94) is a passive spring brake cylinder, which is brought to the release position by supplying air and to the application position by venting air.

10. Electric brake device according to Claim 9,
**characterized in that**
at least the electronic parking-brake control system (96) and a valve device containing at least one magnetic valve are integrated in a parking-brake module (66), wherein the electronic parking-brake control system (96) controls the at least one magnetic valve in order to modulate a working pressure for the at least one parking-brake cylinder (94) at a working port connected to at least one spring brake cylinder (94).

11. Vehicle having an electric brake device according to any of the preceding claims.

## Revendications

1. Dispositif (1) électrique de freinage d'un véhicule, comportant
a) un dispositif électrique de frein de service ayant un dispositif (2) d'actionnement de frein de service, comportant un organe (3) d'actionnement de frein de service, pour produire un signal de demande de frein de service en fonction d'un actionnement de l'organe (3) d'actionnement de frein de service, ainsi qu'ayant une électronique (14) de commande de frein de service, qui, dans le cadre d'une fonction de frein de service, produit, en fonction du signal de demande de frein de service, un signal de serrage pour au moins un actionneur (50) de frein de service,
b) un dispositif électrique de frein de stationnement ayant un dispositif (98) d'actionnement de frein de stationnement, comportant un organe (102) d'actionnement de frein de stationnement distinct de l'organe (3) d'actionnement de frein de service, pour produire un signal de demande de frein de stationnement en fonction d'un actionnement de l'organe (102) d'actionnement de frein de stationnement, ainsi qu'ayant une électronique (96) de commande de frein de stationnement, qui, dans le cadre d'une fonction de frein de stationnement normale, produit, en fonction du signal de demande de frein de stationnement, un signal d'activation pour mettre le frein de stationnement, **caractérisé en ce qu'**il est prévu et constitué au moins une électronique (14 ; 96) de commande, **en ce que**, lorsque le dispositif électrique de frein de service est apte à fonctionnement, dans le cadre d'une fonction agrandie de frein de stationnement,
c) elle contrôle l'état de déplacement du véhicule ainsi que le degré (s) d'actionnement de l'organe (3) d'actionnement du frein de service du dispositif (2) d'actionnement du rein de service, et
d) s'il y a une détection d'un état d'un arrêt du véhicule ou une détection, effectuée à l'instant (t₁) de la prise de l'état d'arrêt du véhicule ou après cet instant (t₁), d'un actionnement de l'organe (3) d'actionnement du frein de service, un degré (Δs) d'actionnement donné à l'avance allant au-delà du degré (s₁) d'action présent à l'instant (t₁) de l'arrêt du véhicule ou après cet instant (t₁), elle produit immédiatement un signal d'activation de mise du frein de stationnement, dans lequel
e) la au moins une électronique (14 ; 96) de commande est constituée de manière à contrôler le dispositif d'actionnement du frein de stationnement et, s'il est détecté un défaut ou une panne du dispositif (98) d'actionnement du frein de stationnement et/ou de son organe (102) d'actionnement de frein de stationnement, à activer automatiquement la fonction de frein de stationnement agrandie.

2. Dispositif électrique de freinage suivant la revendication 1, **caractérisé en ce que** la au moins une électronique (14 ; 96) de commande est constituée de manière à donner la priorité à la fonction de frein de stationnement par rapport à la fonction de frein de stationnement agrandie.

3. Dispositif électrique de freinage suivant l'une des revendications précédentes, **caractérisé en ce que** la au moins une électronique (14 ; 96) de commande est formée de l'électronique de commande de frein de service et/ou de l'électronique de commande de frein de stationnement.

4. Dispositif électrique de freinage suivant la revendication 3, **caractérisé en ce que** l'électronique (14) de commande de frein de service et l'électronique (96) de commande de frein de stationnement communiquent entre elles par une liaison (30) de communication.

5. Dispositif électrique de freinage suivant la revendication 4, **caractérisé en ce que** l'électronique (14) de commande de frein de service contrôle l'état de déplacement du véhicule, ainsi que le degré (s) d'actionnement de l'organe (3) d'actionnement du frein de service du dispositif d'actionnement du frein de service et, s'il y a une détection d'un état d'arrêt du véhicule ou une détection, effectuée à un instant (t₁) de la prise de l'état d'arrêt du véhicule ou après cet instant (t₁), d'un actionnement de l'organe (3) d'actionnement du frein de service, allant, d'un degré (Δs) d'actionnement donné à l'avance au-delà du degré (s₁) d'actionnement présent à l'instant (t₁) de l'état d'arrêt du véhicule ou après cet instant (t₁), provoque immédiatement une production du signal d'activation pour mettre le frein de stationnement par l'électronique (96) de commande de frein de stationnement.

6. Dispositif électrique de freinage suivant la revendication 4, **caractérisé en ce que** l'électronique (96) de commande de frein de stationnement contrôle l'état de déplacement du véhicule ainsi que le degré (s) d'actionnement de l'organe (3) d'actionnement du frein de service et, s'il y a une détection d'un état d'arrêt du véhicule et une détection, effectuée à l'instant (t₁) de la prise de l'état d'arrêt du véhicule ou après cet instant (t₁), d'un actionnement de l'organe (3) d'actionnement du frein de service d'un degré (Δs) d'actionnement donné à l'avance allant au-delà du degré (s₁) d'actionnement présent à l'instant (t₁) de l'état d'arrêt du véhicule ou après cet instant (t₁), produit immédiatement le signal d'activation de la mise du frein de stationnement.

7. Dispositif électrique de freinage suivant l'une des revendications précédentes, **caractérisé en ce que** le degré (s₁) d'actionnement, présent à l'instant (t₁) de la prise de l'état d'arrêt du véhicule, de l'organe d'actionnement du frein de service, peut être égal à zéro ou être plus grand que zéro.

8. Dispositif électrique de freinage suivant l'une des revendications précédentes, **caractérisé en ce qu'**au moins un actionneur (94) de frein de stationnement du dispositif de frein de stationnement est constitué de manière à ce qu'
a) il produise une force de frein de stationnement active par serrage et le signal d'activation représente alors un signal de serrage pour serrer l'actionneur (94) du frein de stationnement, ou **en ce qu'**
b) il provoque un blocage ou un verrouillage d'au moins un actionneur (50) de frein de service déjà serré dans le cadre du freinage de service précédent et le signal d'activation représente alors un signal de verrouillage ou de blocage pour faire passer le au moins un actionneur (94) de frein de stationnement dans une position de blocage ou de verrouillage.

9. Dispositif électrique de freinage suivant la revendication 8, **caractérisé en ce que**
a) le dispositif électrique de frein de service est un dispositif électropneumatique de frein de service et le au moins un actionneur (50) de frein de service est un cylindre pneumatique actif de frein de service, qui est mis dans la position de serrage par alimentation en air et dans la position de desserrage par purge d'air, et
b) le dispositif électrique de frein de stationnement est un dispositif électropneumatique de frein de stationnement et le au moins un actionneur (94) de frein de stationnement est un cylindre passif de frein à ressort accumulateur, qui est mis dans la position de desserrage par alimentation en air et dans la position de serrage par purge d'air.

10. Dispositif électrique de freinage suivant la revendication 9, **caractérisé en ce qu'**au moins l'électronique (96) de commande de frein de stationnement ainsi qu'un dispositif de soupape comportant au moins une électrovanne, sont intégrés dans un module (66) de frein de stationnement, l'électronique (96) de commande de frein de stationnement commandant la au moins une électrovanne pour commander, sur un raccord de travail communiquant avec au moins un cylindre (94) de frein à ressort accumulateur, une pression de travail pour le au moins un cylindre (94) de frein de stationnement.

11. Véhicule ayant un dispositif électrique de freinage suivant l'une des revendications précédentes.
